# EUROPEAN PATENT SPECIFICATION

(11) **EP 2 512 163 B1**
(45) Date of publication and mention of the grant of the patent: **28.02.2018**
(21) Application number: 10838574.1
(22) Date of filing: 06.08.2010
(51) Int. Cl.: H04W 4/18, H04W 80/00

(54) **METHOD, SYSTEM FOR DEFINING MESSAGE IN MACHINE-TO-MACHINE PLATFORM, AND MACHINE-TO-MACHINE PLATFORM**
VERFAHREN, SYSTEM ZUM DEFINIEREN EINER MITTEILUNG IN EINER MACHINE-TO-MACHINE-PLATTFORM UND MACHINE-TO-MACHINE-PLATTFORM
PROCÉDÉ ET SYSTÈME POUR DÉFINIR UN MESSAGE DANS UNE PLATEFORME MACHINE À MACHINE, ET PLATEFORME MACHINE À MACHINE

(30) Priority: 22.12.2009 CN 200910254388
(43) Date of publication of application: 17.10.2012
(73) Proprietor: ZTE Corporation, Shenzhen, Guangdong 518057 (CN)
(72) Inventor: ZHANG, Yizhong, Guangdong 518057 (CN); ZHAO, Changjun, Guangdong 518057 (CN)
(74) Representative: Wilson Gunn
(86) International application number: PCT/CN2010/075775
(87) International publication number: WO 2011/076011

(56) References cited:
- WO-A2-2005/043262
- WO-A2-2009/103623
- CN-A- 1 369 828
- CN-A- 1 825 844
- CN-A- 101 599 890
- "Machine- to- Machine communications (M2M); Functional architecture;M2M07-017_Draft_architecture_ TS", ETSI DRAFT; M2M07-017_DRAFT_ARCHITECTURE_TS, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SmartM2M, no. V0.1.1, 20 November 2009 (2009-11-20), pages 1-18, XP014164928, [retrieved on 2009-11-20]
- CHINA MOBILE COMMUNICATION GROUP CORP.: 'China Mobile Wireless Machine-to- Machine Communication Protocol Interface Specification for M2M Service Platform and Terminal Part', [Online] 21 January 2009, XP008169058 Retrieved from the Internet: <URL:http://www.docin.com/p-50453896.htmb> [retrieved on 2010-10-21]

## Description

### TECHNICAL FIELD

The present disclosure relates to communication technology, and in particular, to a method and a system for defining a message in an M2M platform, and an M2M platform.

### BACKGROUND

In various fields, real-time monitoring is usually required, so machine to machine (M2M) emerges, which is a concept, M2M realizes wireless communications between machines by embedding wireless communication modules in the machines and by means of access means such as wireless communication. For example, real-time monitoring, control, management and maintenance of an electric distribution system may be realized by installing a module in a power equipment for monitoring the running parameters of the electric distribution network; remote adjustment and control of an oil well equipment and acknowledging the working situation of the oil well equipment in a timely and accurately manner may be realized by installing a module in an oil well in oil equipment for collecting the situation information; and, monitoring of a running state of a vehicles may be realized by installing a terminal for collecting onboard information and a remote monitoring system on the vehicle, and the like.

In M2M services, the data communication process, between an M2M terminal and an M2M platform, between an M2M terminal and a terminal, and between an M2M platform and an application platform, is mainly realized through Wireless M2M Protocol (WMMP).

Between an M2M terminal and an M2M platform, Wireless M2M Protocol-Terminal (WMMP-T) is generally adopted.

Between an M2M platform and an application platform, Wireless M2M Protocol-Application (WMMP-A) is generally adopted.

The application market of M2M is expanding quickly worldwide; with the deepening of relevant technologies including communication equipment and management software and the like, and the cost M2M products reduces, M2M services become mature gradually. Through a uniform network platform provided by the M2M technology, information resource sharing and data resource sharing in a digital city can be realized.

Presently, the management of terminals by WMMP-T relates to 13 pairs of messages, these messages are most elementary commands for the management of terminals, which are as follows:
REGISTER and REGISTER_ACK,
LOGIN and LOGIN_ACK,
HEARTBEAT and HEART_BEAT_ACK,
CONFIG_TRAP and CONFIG_TRAP_ACK,
CONFIG_REQ and CONFIG_REQ_ACK,
CONFIG_GET and CONFIG_GET_ACK,
CON_FIG_SET and CONFIG_SET_ACK,
REMOTE_CTRL and REMOTE_CTRL_ACK,
TRANSPARENT_DATA and TRANSPARENT_DATA_ACK,
TRANSPARENT_CMD and TRANSPARENT_CMD_ACK,
DOWNLOAD_INFO and DOWNLOAD_INFO_ACK,
FILE_REQ and FILE_REQ_ACK,
SECURITY_CONFIG and SECURITY_CONFIG_ACK

The management of terminals, such as register, configuration, control and data transparent transmission, can be realized through above commands. When applied, the management of terminals is usually limited to several of the above commands, and the implementation of services can only be defined by using several of the above commands, in this way, the application of the M2M platform is limited, it is difficult to realize various functions, so that it is difficult to satisfy the demands of different users.

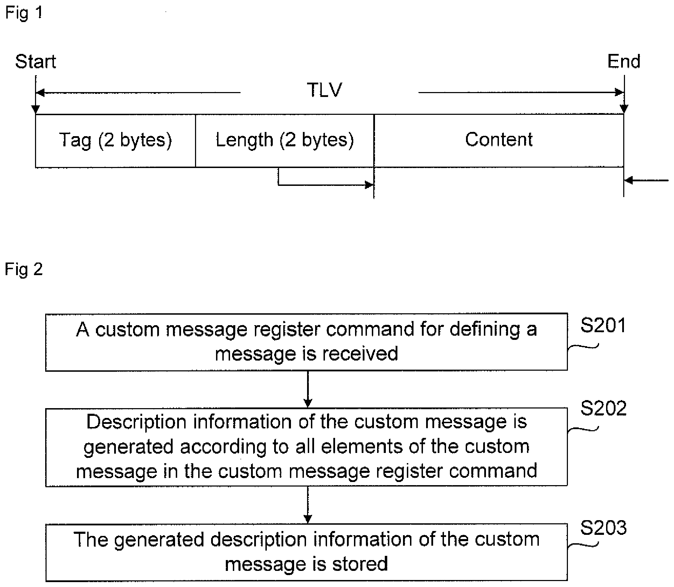

In WMMP-T protocol, the functions of the above commands are concretely realized by Tag-Length-Values (TLV) in commands, and one command usually contains a plurality of TLVs to realize a complicated function. TLV is a formatted number or variable length string or byte array, which is usually used for dynamically expanding data and parameters in the message interaction, the structure of TLV is shown in Fig. 1, T in TLV represents TAG, which is the definition tag of the string; L in TLV represents LENGTH, which is the length of valid data or parameters extended in the TLV; V in the TLV represents VALUE, which is the content of valid data or parameters in the TLV.

In the V part of TLV, a part of data, which has to be filled during message transmission, is called a fixed part, of which the length and type have been specified in WMMP, the fixed part may be understood as a special TLV, indicating that there are no T part and L part.

In WMMP protocol, 215 TLVs are defined, and these TLVs are used to manage parameters of terminals, such as configuration, statistics, control and software, to realize the service function of terminals. However, for a particular terminal, not all of the 215 TLVs may be used, and these 215 TLVs may not satisfy the application requirements of the terminal. Therefore, commands and TLVs already defined by simple applications are difficult to adapt to the differences of various application platforms and terminals and to satisfy the requirements of various users.

After a new terminal or application platform is accessed to an M2M platform, in order to use this new terminal or application platform normally, it is always necessary to modify the background program of the M2M platform according to the requirements of the terminal or application platform, re-compile, and this new terminal or application platform can only be used after compiling the associated function parameters of the new terminal or application platform into the M2M platform, the operations are quite complicated.

For example, if a new terminal is required to monitor the noise index of an area, then the terminal has to be accessed to the M2M platform. However, the M2M platform may have no parameter related to monitoring of noise index, if the terminal needs to report data about this aspect, then the M2M platform may be unable to identify and process, thus it is difficult to realize the due monitoring function. In this way, when the terminal is required, it is necessary to modify and recompile the processing program of the M2M platform, so that the M2M platform can support the functions of the terminal, and the operations are quite complicated, and the access of the new terminal or application platform is time-consuming.

The document WO 2009/103623 discloses a system and methods for associating a 'generic' wireless device, i.e., a device that is not pre-programmed with subscription credentials corresponding to a particular operator, with a Home Operator designated by the device's owner.

### SUMMARY

The embodiment of the present disclosure provides a method and a system for defining a message in an M2M platform, and an M2M platform, to simplify operations of defining a custom message in an M2M platform.

A method for defining a custom message for the management of terminals in an M2M platform comprises:
a custom message register command for defining the custom message is received by the M2M platform;
   description information of the custom message is generated by the M2M platform according to all elements of the custom message in the custom message register command, wherein the elements of the custom message comprise identification information and function description of the custom message;
the description information of the custom message is stored by the M2M platform.

Further, before storing the description information of the custom message, the method may further comprise:
it is determined that the identification information of the custom message differs in the description information of the custom message is different from identification information of similar messages already stored in the M2M.

Further, the step of storing the description information of the custom message is specifically as follows: the description information of the custom message is stored into a database.

Still further, the method may further comprise: the description information of the custom message is stored into a memory table;
or, the description information of each custom message in the database is regularly updated into the memory table.

Wherein, the custom message is specifically a custom TLV, and elements of the custom message may further comprise: length and data type of the custom message;
or, the custom message is specifically a custom command.

Preferably, after the description information of the custom message is stored, the method may further comprise: a processing result is returned.

A system for defining a custom message for the management of terminals in an M2M platform comprises:
a terminal or an application platform configured to send a custom message register command for defining the custom message when the custom message is defined;
an M2M platform configured to receive the custom message register command from the terminal and the application platform, generate description information of the custom message according to all elements of the custom message in the custom message register command, and store the description information of the custom message; wherein the elements of the custom message comprise identification information and function description of the custom message.

Further, the M2M platform may comprise:
a receiving unit configured to receive the custom message register command sent by the terminal or application platform;
a custom processing unit configured to generate description information of a custom message according to all elements of the custom message in the custom message register command received by the receiving unit;
a storage unit configured to store the description information of the custom message, which is generated by the custom processing unit.

Preferably, the M2M platform may further comprise:
a determination unit configured to determine whether the identification information of the custom message in the description information of the custom message, which is generated by the custom processing unit, is different from identification information of similar messages already stored in the storage unit;
wherein, the storage unit is further configured to store the description information of the custom message, which is generated by the custom processing unit and verified by the determination unit.

Further, the storage unit may be a database; or, the storage unit may be a database and a memory table.

An M2M platform comprises:
a receiving unit configured to receive a custom message register command for defining a custom message for the management of terminals sent by a terminal or an application platform;
a custom processing unit configured to generate description information of a custom message according to all elements of the custom message in the custom message register command received by the receiving unit, wherein the elements of the custom message comprise identification information and function description of the custom message;
a storage unit configured to store the description information of the custom message, which is generated by the custom processing unit.

Further, the M2M platform may further comprise:
a determination unit configured to determine whether the identification information of the custom message in the description information of the custom message, which is generated by the custom processing unit, is different from identification information of similar messages already stored in the storage unit;
wherein, the storage unit is further configured to store the description information of the custom message, which is generated by the custom processing unit and verified by the determination unit.

Further, the storage unit may be a database; or, the storage unit may be a database and a memory table.

The embodiment of the present disclosure provides a method and a system for defining a message in an M2M platform, and an M2M platform. A custom message register command, which is sent by a newly accessed terminal or an application platform and is used for defining a message, is processed and analyzed by adding a custom processing unit into the M2M platform, and generate corresponding description information of the custom register command in accordance with the requirements of the terminal according to the content of the custom message register command, the M2M platform also can directly process the description information of the custom message imported by the administrator through the custom processing unit, so as to define the custom message in the M2M conveniently, and to establish a new service easily.

### BRIEF DESCRIPTION OF THE DRAWINGS

Fig. 1 is a structure diagram of an existing TLV;
Fig. 2 is a flow diagram of a method for defining a message in an M2M platform according to an embodiment of the present disclosure;
Fig. 3 is a flow diagram of a method for a terminal to register a custom TLV according to an embodiment of the present disclosure;
Fig. 4 is a flow diagram of a method for a terminal to register a custom command according to an embodiment of the present disclosure;
Fig. 5 is a flow diagram of a method for an application platform to register a custom TLV according to an embodiment of the present disclosure;
Fig. 6 is a flow diagram of a method for an application platform to register a custom command according to an embodiment of the present disclosure;
Fig. 7 is a flow diagram of a method for an administrator to set a custom message according to an embodiment of the present disclosure;
Fig. 8 is a system flow diagram for defining a message according to an embodiment of the present disclosure;
Fig. 9 is a structure diagram of an M2M platform according to an embodiment of the present disclosure.

### DETAILED DESCRIPTION

The embodiment of the present disclosure provides a method and a system for defining a message in an M2M platform, and an M2M platform. A custom processing unit is added into the M2M platform to process and analyze a custom message register command, which is sent by a newly accessed terminal or an application platform and is used for defining a message, the custom message register command comprises all essential information for generating the description information of the custom message, the custom processing unit may generates the description information of the custom register command, which is required by the terminal or application platform, according to these information, to satisfy different requirements of the newly accessed terminal or application platform, the M2M platform also can directly process the description information of the custom message imported by the administrator through the custom processing unit, so that it is quite convenient to define the description information of the custom message and establish a new service in the M2M.

As shown in Fig. 2, the method for defining a message in an M2M platform according to an embodiment of the present disclosure comprises:
S201: A custom message register command for defining a message is received.
S202: description information of the custom message is generated according to all elements of the custom message in the custom message register command.

The custom message register command comprises all elements necessary for generating the description information of the custom message, if a command is to be defined, then it is usually necessary to include a unique command character (i.e. identification information) of each command and a brief description of the command, if the length of the command character is different from a default value, then it is also possible to include the length of the command character; if a TLV is defined, then a TAG value, a length, a data type and a brief description of the TLV function are usually included.

S203: The generated description information of the custom message is stored.

In this way, the terminal can communicate with the M2M platform by using the description information of the custom message.

In order to further protect the information of the M2M platform, if the terminal or application platform is accessed to the M2M platform just now, before transmitting the custom message register command to the M2M platform, it is necessary to login the M2M platform, during login, first, the terminal or application platform transmits a login request to the M2M platform, after receiving the login request, the M2M platform processes the login request and feeds back a login result, the terminal or application platform can define a message in the M2M platform only if the login is successful.

Further, in order to prevent the terminal or application platform from registering repeatedly or prevent two terminals or application platforms from register different messages using the same message identification information, it may be authenticated whether the identification information in the description information of the custom message has been already used by other messages stored in the M2M platform after the description information of the custom message is generated, if not, there will be no conflict, and then the description information of the custom message is stored in the M2M platform.

During storing, many ways may be used for storing, for example, in a text mode or a database mode or the like, of course, the management will be easier if the description information is stored in the database mode, and the processing speed may be accelerated in use.

In order to further improve the efficiency of communication between the terminal or application platform and the M2M platform, at the same time that the description information of the custom message is stored in the database, the description information of the custom message may also be stored in the memory table of the memory, in this way, after the message sent by the terminal is received, the function of the custom message may be directly determined according to the description information of the custom message stored in the memory table.

If the memory space of the M2M platform is limited, frequently-used messages in the database may be regularly updated into the memory table, to improve the communication efficiency between the terminal or application platform and the M2M platform.

Messages to be defined generally comprise two types: commands and TLVs, both terminals and application platforms may have to define the two types of messages, as protocols used by terminals and application platforms to communicate with the M2M platform are different, the procedures of analysis by M2M are also different, which will be described below through several specific embodiments:
Embodiment 1: A terminal registers a custom TLV in an M2M platform.

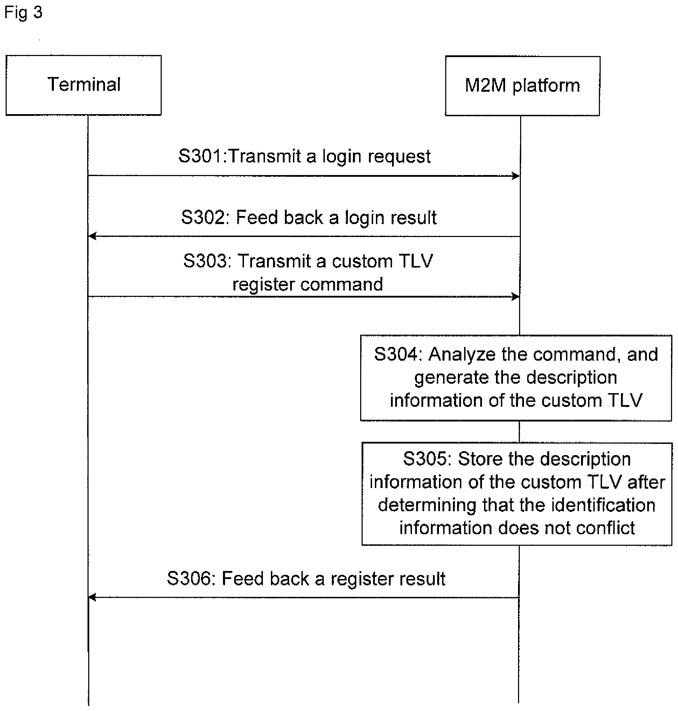

As shown in Fig. 3, a method for a terminal to register a custom TLV in an M2M platform mainly comprises:
S301: The terminal sends a login (LOGIN) request command to the M2M platform.
S302: After processing, the M2M platform feeds back a login success (LOGIN ACK) command to the terminal.

The login request message and the login success message have already been defined in the WMMP-T.

S303: After the login is successful, the terminal transmits a custom TLV register command to the M2M platform.

The custom TLV register command is preset, for example, CUSTOM_TLV_REQ, the M2M platform will know that the command is used for registering the custom TLV from the command character of the custom TLV register command.

S304: The M2M platform analyzes each TLV in the custom TLV register command and generates the description information of the custom TLV.

S305: After determining that the TAG of the custom TLV in the description information of the custom TLV does not conflict with the TAG of the TLVs already stored in the M2M platform, the M2M platform stores the description information of the custom TLV.

S306: The M2M platform feeds back a register result CUSTOM_TLV_ACK to the terminal.

Each TLV in the custom TLV register command may be defined in the following way:
the first TLV may be used to set the TAG value of the custom TLV, assume that the TAG value of the first TLV is set to 0xC001, the M2M platform analyzes the first TLV, obtains the TAG value of the TLV as 0xC001, determines that the TLV is used to define the TAG value of the custom TLV according to the stored description information of the TLV, and obtains the L value and the V value of the first TLV, wherein L value is the length of the TAG value of the custom TLV, V value is the TAG value of the custom TLV. According to regulations of WMMP-T protocol, L value generally equals to 2, if the obtained V value is P101, then it may be determined that the TAG value of the custom TLV in the description information of the custom TLV to be generated is 0xP101.
the second TLV may be used to set the LEN value of the custom TLV, assume that the TAG value of the second TLV is set to 0xC002, the M2M platform analyzes the second TLV, obtains the TAG value of the TLV as 0xC002, determines that the TLV is used to define the LEN value of the custom TLV according to the stored description information of the TLV, and obtains the L value and the V value of the second TLV, wherein L value is the length of the LEN value of the custom TLV, V value is the LEN value of the custom TLV. According to regulations of WMMP-T protocol, L value generally equals to 2, if the obtained V value is 0005, it may be determined that the LEN value of the custom TLV in the description information of the custom TLV to be generated is 0005, that is, the length of the V value of the custom TLV is 0005.

The third TLV may be used to set the type of the custom TLV, assume that the TAG value of the third TLV is set to 0xC003, the M2M platform analyzes the third TLV, obtains the TAG value of the TLV as 0xC003, determines that the TLV is used to define the type of the custom TLV according to the stored description information of the TLV, and obtains the L value and the V value of the third TLV, wherein L value is the length of the code type of the custom TLV, V value is the code type of the custom TLV. According to regulations in WMMP-T protocol, L value generally equals to 2, the code type corresponds to the type of the TLV one by one and has been preset, for example, if the obtained V value is 0001, it may be determined that the type of the custom TLV in the description information of the custom TLV to be generated is integer type according to the corresponding relationship.

The fourth TLV may be used to describe the custom TLV, that is, describing what the TLV is used for, and defining the unit and meaning of each parameter, or the like. Assume that the TAG value of the fourth TLV is set to 0xC004, the M2M platform analyzes the fourth TLV, obtains the TAG value of the TLV as 0xC004, determines that the TLV is used to describe the custom TLV according to the stored description information of the TLV, and obtains the L value and the V value of the fourth TLV, wherein L value is the length of description of the custom TLV, V value is the description of the custom TLV, when receiving the custom TLV during subsequent communication, the M2M platform determines the meaning of the received data according to the description.

For example, a terminal, which is used for monitoring the ambient noise, may establish a noise monitoring service through the custom TLV after being accessed to the M2M platform, after logging the M2M platform, the terminal transmits a custom TLV register command (CUSTOM_TLV_REQ) to the M2M platform, the command is carried with four TLVs: "C0001 0002 AAAA C002 0002 0004 C003 0002 0001 C004 0064 noise index, unit: dB". According to the four TLVs, the description information of the custom TLV may be generated for the application platform for the service, in the description information of the custom message, TAG value is AAAA, the length of the V part is 4, the type is integer type, and the V part means the dB value of the ambient noise. The M2M platform determines whether the TAG value of AAAA conflicts with the TAG value of the already registered TLVs, if it is determined that there is no conflict, the generated description information of the custom TLV is stored, and a register result is fed back to the terminal. In this way, when it is necessary for the M2M platform to conduct a statistic on the noise index of each district, it is only necessary for the M2M platform to transmit a get parameter command CONFIG_GET with TAG being AAAA to each designated terminal according to regular procedures, to realize a custom service of getting the noise index parameter.

Embodiment 2: A terminal registers a custom command in an M2M platform.

Sometimes, it may be required to complete a relatively complicated function in a service, which has to be completed through a plurality of TLVs in the custom command, at this time, it is necessary to define not only each TLV command, but also one custom command.

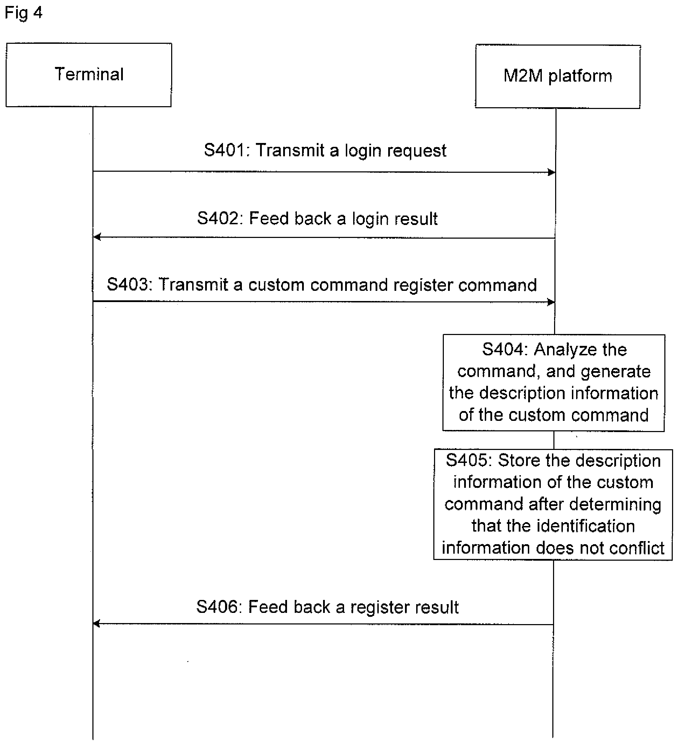

As shown in Fig. 4, a method for a terminal to register a custom command in an M2M platform mainly comprises:
S401: The terminal transmits a login (LOGIN) request command to the M2M platform.
S402: After processing, the M2M platform feeds back a login success (LOGIN ACK) command to the terminal.

The login request message and the login success message have already been defined in the WMMP-T protocol.

S403: After the login is successful, the terminal transmits a custom command register command to the M2M platform.

The custom command register command is preset, for example, CUSTOM_CMD_REQ, the M2M platform will know that the command is used for registering the custom TLV from the command character of the custom TLV register command.

S404: The M2M platform analyzes each TLV in the custom command register command and generates the description information of the custom command.

S405: After determining that the identification information in the description information of the custom command does not conflict with the identification information of the commands already stored in the M2M platform, the M2M platform stores the description information of the custom command.

S406: The M2M platform feeds back a register result CUSTOM_CMD_ACK to the terminal.

Each TLV in the custom command register command may be defined in the following way:
the first TLV may be used to set the command character of the custom command (i.e. the identification information), assume that the TAG value of the first TLV is set to 0xB001, the M2M platform analyzes the first TLV, obtains the TAG value of the TLV as 0xB001, determines that the TLV is used to define the command character of the custom command according to the stored description information of the TLV, and obtains the L value and the V value of the first TLV, wherein L value is the length of the command character of the custom command, V value is the command character of the custom command, L value generally equals to 2 according to regulations in WMMP-T protocol.
the second TLV may be used to describe the custom command, that is, describing what the command is used for, and defining the unit and meaning of each parameter, or the like. Assume that the TAG value of the second TLV is set to 0xB002, the M2M platform analyzes the second TLV, obtains the TAG value of the command as 0xB002, determines that the TLV is used to describe the custom command according to the stored description information of the TLV, and obtains the L value and the V value of the second TLV, wherein L value is the length of description of the custom command, V value is the description of the custom command, when receiving the custom command during subsequent communication, the M2M platform determines the meaning of the received command according to the description.

Embodiment 3: An application platform registers a custom TLV in an M2M platform.

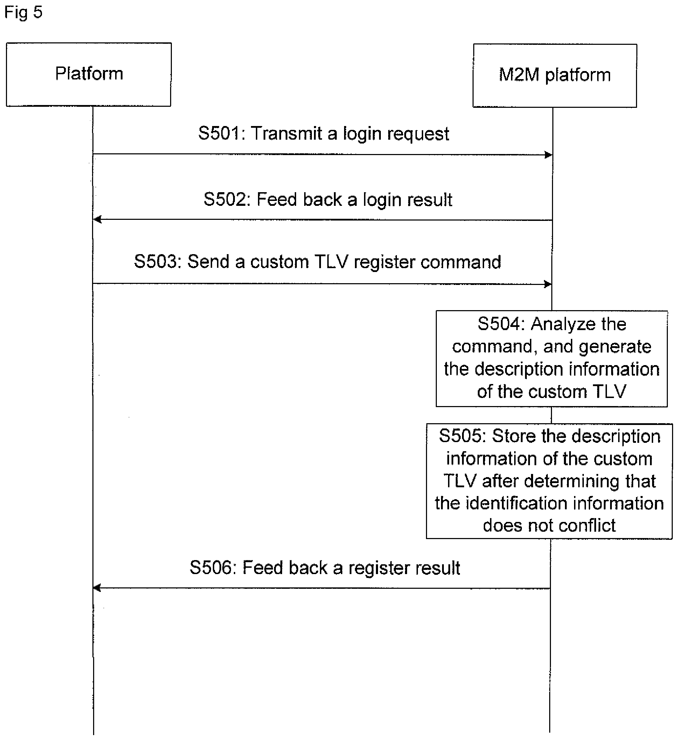

As shown in Fig. 5, a method for an application platform to register a custom TLV in an M2M platform mainly comprises:
S501: The application platform transmits a login (LOGIN) request command to the M2M platform.
S502: After processing, the M2M platform feeds back a login success (LOGIN ACK) command to the application platform.

The login request message and the login success message have already been defined in the WMMP-A protocol.

S503: After the login is successful, the application platform transmits a custom TLV register command to the M2M platform.

The custom TLV register command is preset, for example, TappCustomTlvReq, the M2M platform will know that the command is used fro registering the custom TLV from the command character of the custom TLV register command.

S504: The M2M platform analyzes the BODY part in the custom TLV register command and generates the description information of the custom TLV.

S505: After determining that the TAG of the custom TLV in the description information of the custom TLV does not conflict with the TAG of the TLVs already stored in the M2M platform, the M2M platform stores the description information of the custom TLV.

S506: The M2M platform feeds back a register result to the application platform.

The structure of the custom TLV register command may be:

```
    <TappCustomTlvReq>
    <HEAD>head</HEAD>
    <HASH>message abstract</HASH>
    <BODY>
    <TAG> TAG of the custom TLV</TAG>
    <LEN>length of the custom TLV </LEN>
    <TYPE>type of the custom TLV </TYPE>
    <DESC>simple function description</DESC>
    </BODY>
    </TappCustomTlvReq>
```

where, <TAG> represents the TAG of the custom TLV, <LEN> represents the length of the V part in the custom TLV, <TYPE> is the type of the custom TLV, and <DESC> is the simple description of the custom TLV

Embodiment 4: an application platform registers a custom command in an M2M platform.

Sometimes, it may be required to complete a relatively complicated function in a service, which has to be completed through a plurality of TLVs in the custom command, at this time, it is necessary to define not only each TLV command, but also one custom command.

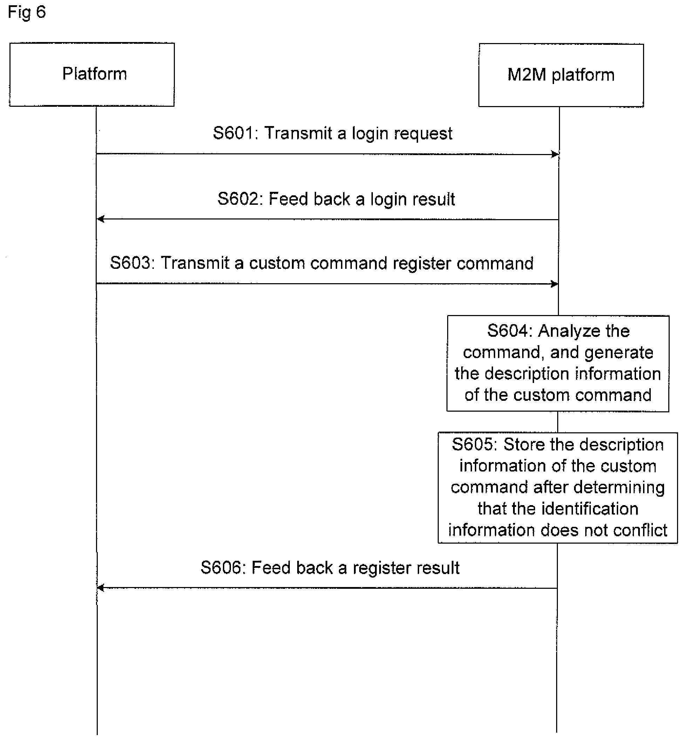

As shown in Fig. 6, a method for an application platform to register a custom command in an M2M platform mainly comprises:
S601: The application platform transmits a login request command to the M2M platform.
S602: After processing, the M2M platform feeds back a login success command to the application platform.

The login request message and the login success message have already been defined in the WMMP-A protocol.

S603: After the login is successful, the application platform transmits a custom command register command to the M2M platform.

The custom command register command is preset, for example, TappCustomCmdReq, the M2M platform will know that the command is used for registering the custom TLV from the command character of the custom command register command.

S604: The M2M platform analyzes the BODY part of the custom command register command and generates the description information of the custom command.

S605: After determining that the identification information of the custom command in the description information of the custom command does not conflict with the identification information of the commands already stored in the M2M platform, the M2M platform stores the description information of the custom command.

S606: The M2M platform feeds back a register result to the application platform.

The structure of the custom command register command may be:

```
    <TappCustomCmdReq>
    <HEAD>head</HEAD>
    <HASH>message abstract</HASH>
    <BODY>
    <CMD> custom command character</CMD >
    <LEN>length of the custom command character </LEN>
    <DESC>simple function description</DESC>
    </BODY>
    </TappCustomCmdReq>
```

where, <CMD> represents the command character of the custom command, <LEN> represents the length of the command character of the custom command, and <DESC> is the simple function description of the custom command.

Embodiment 5: custom commands and custom TLVs may be customized by an administrator after the administrator logins the M2M platform.

The administrator may import them in batch in a text mode, they may also be input one by one.

The administrator transmits a custom message register command to the terminal, the M2M platform generates the description information of the custom message according to the content in the custom message register command and stores the description information.

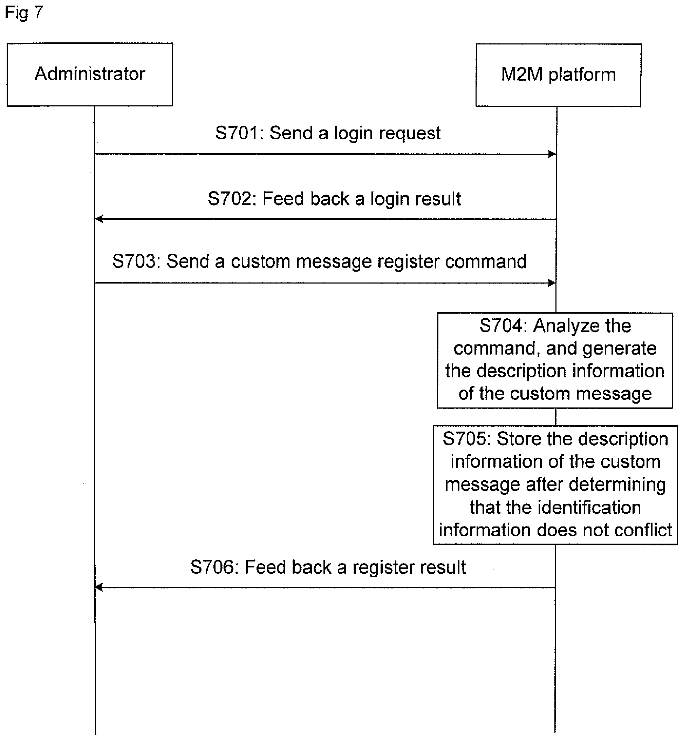

As shown in Fig. 7, a method for an administrator to customize a custom command and a custom TLV comprises:
S701: The administrator transmits a login request command to the M2M platform.
S702: After processing, the M2M platform feeds back a login success command.
S703: After the login is successful, the administrator transmits a custom message register command to the M2M platform.
S704: After analyzing the command, the M2M platform generates the description information of the custom message.
S705: After determining that the identification information of the custom message in the description information of the custom message does not conflict with the identification information already stored in the M2M platform, the M2M platform stores the description information of the custom message.
S706: A register result is fed back.

The command format of the custom command customized by the administrator may be as follows:
custom command character | length of the custom command character | simple description;

The command format of the custom TLV customized by the administrator may be as follows:
TAG of the custom TLV | length of the custom TLV | type of the custom TLV | simple description;

After analyzing the text, the M2M platform may check the identification information of the custom command or TAG of the custom TLV, if there is no conflict, then the description information of the custom command or the description information of the custom TLV is recorded in the memory table and database.

For management convenient, the M2M platform also may record the processing result of each custom message into the log.

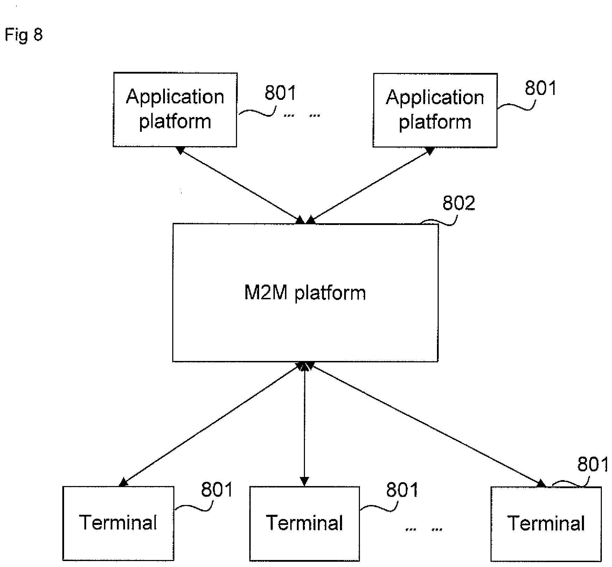

The embodiment of the disclosure also provides a system for defining a message in an M2M platform. As shown in Fig. 8, the system comprises a terminal or an application platform 801, and further comprises an M2M platform 802, wherein:
the terminal or the application platform 801 is configured to send a custom message register command for defining a message necessary for a new service to the M2M platform 802 when a message is defined.
the M2M platform 802 is configured to receive the custom message register command from the terminal or the application platform 801, generate description information of the custom message according to all elements of the custom message in the custom message register command, and store the description information of the custom message; wherein the elements of the custom message comprise identification information and function description of the custom message.

Generally, the terminal 801 is connected with the M2M platform 802 through a T interface and communicates with the M2M platform 802 through the WMMP-T protocol, the application platform 801 is connected with the M2M platform 802 through an A interface and communicates with the M2M platform 802 through the WMMP-A protocol.

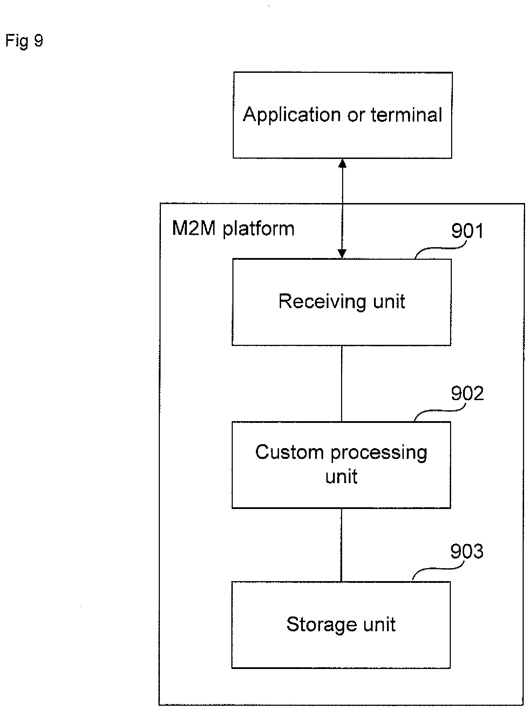

Further, as shown in Fig. 9, the M2M platform provided by the embodiment of the present disclosure specifically comprises: a receiving unit 901, a custom processing unit 902 and a storage unit 903, wherein:
the receiving unit 901 is configured to receive the custom message register command sent by the terminal or application platform; the receiving unit 901 is connected with the application platform through the A interface and connected with the terminal through the T interface;
the custom processing unit 902 is configured to generate description information of a custom message according to all elements of the custom message in the custom message register command received by the receiving unit 901;
the storage unit 903 is configured to store the description information of the custom message, which is generated by the custom processing unit 902.

Further, in order to prevent repeat register or prevent two terminals or application platforms from using the same identification information to register, the M2M platform further comprises:
a determination unit configured to determine whether the identification information of the custom message in the description information of the custom message, which is generated by the custom processing unit 902, is different from identification information of similar messages already stored in the storage unit 903;
wherein, the storage unit 903 is further configured to store the description information of the custom message, which is generated by the custom processing unit 902 and verified by the determination unit.

Wherein the storage unit 903 may be a specific database, and also may be a database and a memory table, during storing, the description information of the custom message may be stored in the database only, also may be stored in both the database and the memory table, or the description information of the custom message may be stored in the database first, and then the description information of each message is regularly synchronized to the memory table from the database.

The embodiment of the present disclosure provides a method and a system for defining a message in an M2M platform, and an M2M platform. A custom message register command, which is sent by a newly accessed terminal or an application platform and is used for defining a message, is processed and analyzed by adding a custom processing unit into the M2M platform, and generate corresponding description information of the custom register command in accordance with the requirements of the terminal according to the content of the custom message register command, the M2M platform also can directly process the description information of the custom message imported by the administrator through the custom processing unit, so as to define the custom message in the M2M conveniently, and to establish a new service easily.

Obviously, persons skilled in the art may make various changes and modifications to the embodiments of the present disclosure within the scope of the present disclosure. If these changes and modifications to the present disclosure are within the scope of claims of the present disclosure and equivalent thereof, these changes and modifications should be included within the present disclosure.

## Claims

1. A method for defining a custom message for the management of terminals in a Machine to Machine, M2M, platform, **characterized in that**, the method comprises:
receiving (S201), by the M2M platform, a custom message register command for defining the custom message;
generating (S202), by the M2M platform, description information of the custom message according to all elements of the custom message in the custom message register command, wherein the elements of the custom message comprise identification information and function description of the custom message; and
storing (S203), by the M2M platform, the description information of the custom message.

2. The method according to claim 1, further comprising the step, preceding the step of storing the description information of the custom message, of:
determining that the identification information of the custom message in the description information of the custom message is different from identification information of similar messages already stored in the M2M.

3. The method according to claim 1, wherein the step of storing the description information of the custom message comprises: storing the description information of the custom message into a database.

4. The method according to claim 3, further comprising:
storing the description information of the custom message into a memory table; or
updating regularly the description information of each custom message in the database into the memory table.

5. The method according to claim 1, wherein the custom message is a custom Tag-Length-Value, TLV, and the elements of the custom message further comprise: length and data type of the custom message.

6. The method according to claim 1, wherein the custom message is a custom command.

7. A system for defining a custom message for the management of terminals in a Machine to Machine, M2M, platform, **characterized in that** the system comprises:
a terminal or an application platform (801), configured to send a custom message register command for defining the custom message when the custom message is defined; and
an M2M platform (802), configured to receive the custom message register command from the terminal or the application platform (801), generate description information of the custom message according to all elements of the custom message in the custom message register command, and store the description information of the custom message; wherein the elements of the custom message comprise identification information and function description of the custom message.

8. The system according to claim 7, wherein the M2M platform (802) comprises:
a receiving unit (901), configured to receive the custom message register command sent by the terminal or application platform (801);
a custom processing unit (902), configured to generate description information of a custom message according to all elements of the custom message in the custom message register command received by the receiving unit (901);
a storage unit (903), configured to store the description information of the custom message, which is generated by the custom processing unit (902).

9. The system according to claim 8, wherein the M2M platform (802) further comprises:
a determination unit configured to determine whether the identification information of the custom message in the description information of the custom message, which is generated by the custom processing unit (902), is different from identification information of similar messages already stored in the storage unit (903);
wherein, the storage unit (903) is further configured to store the description information of the custom message, which is generated by the custom processing unit (902) and verified by the determination unit.

10. The system according to claim 8 or 9, wherein the storage unit (903) is:
a database; or
a database and a memory table.

11. A Machine to Machine, M2M, platform, **characterized in that**, the M2M platform comprises:
a receiving unit (901), configured to receive a custom message register command for defining a custom message for the management of terminals sent by a terminal or an application platform;
a custom processing unit (902), configured to generate description information of the custom message according to all elements of the custom message in the custom message register command received by the receiving unit (901), wherein the elements of the custom message comprise identification information and function description of the custom message; and
a storage unit (903), configured to store the description information of the custom message, which is generated by the custom processing unit (902).

12. The M2M platform according to claim 11, further comprising:
a determination unit configured to determine whether the identification information of the custom message in the description information of the custom message, which is generated by the custom processing unit (902), is different from identification information of similar messages already stored in the storage unit (903);
wherein, the storage unit (903) is further configured to store the description information of the custom message, which is generated by the custom processing unit (902) and verified by the determination unit.

13. The M2M platform according to claim 11 or 12, wherein the storage unit (903) is;
a database; or
a database and a memory table.

## Patentansprüche

1. Verfahren zum Definieren einer nutzerspezifischen Nachricht für das Management von Endgeräten in einer Maschine-zu-Maschine-Plattform M2M,
**dadurch gekennzeichnet,**
**dass** das Verfahren aufweist:
Empfangen (S201) von der M2M-Plattform eine Registrieranweisung für eine nutzerspezifische Nachricht zum Definieren einer nutzerspezifischen Nachricht;
Erzeugen (S202) durch die M2M-Plattform Beschreibungsinformationen der nutzerspezifischen Nachricht entsprechend allen Elementen der nutzerspezifischen Nachricht in der Registrierungsanweisung für die nutzerspezifische Nachricht, wobei die Elemente der nutzerspezifischen Nachricht Identifikationsinformation und funktionale Beschreibung der nutzerspezifischen Nachricht beinhalten; und
Speichern (S203) durch die M2M-Plattform die Beschreibungsinformation der nutzerspezifischen Nachricht.

2. Verfahren nach Anspruch 1, des Weiteren aufweisend den Schritt vor dem Schritt des Speicherns der Beschreibungsinformation der nutzerspezifischen Nachricht:
Bestimmen dass die Identifikationsinformationen der nutzerspezifischen Nachricht in der Beschreibungsinformation der nutzerspezifischen Nachricht unterschiedlich von der Identifikationsinformation von gleichen Nachrichten, welche bereits in der M2M gespeichert sind, ist.

3. Verfahren nach Anspruch 1,
wobei der Schritt des Speicherns der Beschreibungsinformation der nutzerspezifischen Nachricht aufweist:
Speichern der Beschreibungsinformationen der nutzerspezifischen Nachricht in einer Datenbank.

4. Verfahren nach Anspruch 3, des Weiteren aufweisend:
Speichern der Beschreibungsinformationen in nutzerspezifischer Nachricht in einer Speichertabelle; oder
regelmäßiges Updaten der Beschreibungsinformation von jeder nutzerspezifischen Nachricht in der Datenbank in die Speichertabelle.

5. Verfahren nach Anspruch 1,
wobei die nutzerspezifische Nachricht ein nutzerspezifischer Typlängenwert (Tag-Length-Value) TLV ist und die Element der nutzerspezifischen Nachricht des Weiteren aufweisen: Länge und Datentyp der nutzerspezifischen Nachricht.

6. Verfahren nach Anspruch 1,
wobei die nutzerspezifische Nachricht ein nutzerspezifisches Kommando ist.

7. System zum Definieren einer nutzerspezifischen Nachricht für das Management von Endgeräten in einer Maschine-zu-Maschine-Plattform, M2M,
**dadurch gekennzeichnet,**
**dass** das System aufweist:
ein Endgerät oder eine Anwendungsplattform (801), welche ausgerichtet ist, eine Registeranweisung für eine nutzerspezifische Nachricht zum Definieren einer nutzerspezifischen Nachricht auszusenden, wenn die nutzerspezifische Nachricht definiert ist; und
wenn eine M2M-Plattform (802), welche ausgelegt ist, um eine Registrieranweisung für eine nutzerspezifische Nachricht von einem Endgerät oder einer Anwendungsplattform (801) zu erhalten, Beschreibungsinformationen der nutzerspezifischen Nachricht entsprechend allen Elementen der nutzerspezifischen Nachricht in der Registrieranweisung für die nutzerspezifische Nachricht zu erzeugen und die Beschreibungsinformation der nutzerspezifischen Nachricht zu speichern, wobei die Elemente der nutzerspezifischen Nachricht Identifikationsinformationen und Funktionsbeschreibung der nutzerspezifischen Nachricht beinhalten.

8. System nach Anspruch 7,
wobei die M2M-Plattform (802) aufweist:
eine Empfangseinheit (901), welche ausgelegt ist, um eine Registrierungsanweisung für eine nutzerspezifische Nachricht, welche von dem Endgerät oder der Anmeldungsplattform (801) gesendet ist, zu empfangen;
eine nutzerspezifische Verarbeitungseinheit (902), welche ausgelegt ist, Beschreibungsinformationen einer nutzerspezifischen Nachricht entsprechend von allen Elementen der nutzerspezifischen Nachricht in der Registrierungsanweisung für die nutzerspezifische Nachricht, welche von der Empfangseinheit (901) empfangen wurde, zu erzeugen;
eine Speichereinheit (903), welche ausgelegt ist, die Beschreibungsinformation der nutzerspezifischen Nachricht, welche von der nutzerspezifischen Bearbeitungseinheit (901) erzeugt ist, zu speichern.

9. System nach Anspruch 8,
wobei die M2M-Plattform (802) des Weiteren aufweist:
eine Bestimmungseinheit, welche ausgelegt ist, um zu bestimmen ob die Identifikationsinformation der nutzerspezifischen Nachricht in der Beschreibungsinformation der nutzerspezifischen Nachricht, welche von der nutzerspezifischen Verarbeitungseinheit (901) erzeugt wurde, unterschiedlich von Identifikationsinformationen von gleichen Nachrichten, welche bereits in der Speichereinheit (903) gespeichert sind, ist;
wobei die Speichereinheit (903) des Weiteren ausgelegt ist, um die Beschreibungsinformation von der nutzerspezifischen Nachricht, welche von der nutzerspezifischen Bearbeitungseinheit (901) erzeugt ist und von der Bestimmungseinheit verifiziert wurde, zu speichern.

10. System nach Anspruch 8 oder 9,
wobei die Speichereinheit (903)
Datenbank; oder
eine Datenbank oder eine Speichertabelle ist.

11. Maschine-zu-Maschine-Plattform M2M,
**dadurch gekennzeichnet,**
**dass** die M2M-Plattform aufweist:
eine Empfangseinheit (901), welche ausgelegt ist, eine Registeranweisung für eine nutzerspezifische Nachricht zum Definieren einer nutzerspezifischen Nachricht für das Management von Endgeräten, welche von einem Endgerät oder einer Anwendungsplattform gesendet ist, zu empfangen;
eine nutzerspezifische Verarbeitungseinheit (902), welche ausgelegt ist, um Beschreibungsinformationen der nutzerspezifischen Nachricht entsprechend allen Elementen der nutzerspezifischen Nachricht in der Registrierungsanweisung für die nutzerspezifische Nachricht, welche von der Empfangseinheit (901) empfangen wurde, zu erzeugen, wobei die Elemente der nutzerspezifischen Nachricht Identifikationsinformationen und Funktionsbeschreibungen der nutzerspezifischen Nachricht aufweisen; und
eine Speichereinheit (903), welche ausgelegt ist, um Beschreibungsinformationen der nutzerspezifischen Nachricht, welche von der nutzerspezifischen Verarbeitungseinheit (902) erzeugt wurde, zu speichern.

12. M2M-Plattform nach Anspruch 11, des Weiteren aufweisend:
eine Bestimmungseinheit, welche ausgelegt ist, um zu bestimmen, ob die Identifikationsinformation der nutzerspezifischen Nachricht in der Beschreibungsinformation der nutzerspezifischen Nachricht, welche durch die nutzerspezifische Verarbeitungseinheit (901) erzeugt wurde, unterschiedlich von Identifikationsinformation von gleichen Nachrichten, welche bereits in der Speichereinheit (903) gespeichert sind, ist;
wobei die Speichereinheit (903) des Weiteren ausgelegt ist, um Beschreibungsinformationen der nutzerspezifischen Nachricht, welche durch die nutzerspezifische Bearbeitungseinheit (902) erzeugt wurde und durch die Bestimmungseinheit verifiziert wurde, abzuspeichern.

13. M2M-Plattform nach Anspruch 11 oder 12,
wobei die Speichereinheit (903)
eine Datenbank oder
eine Datenbank und eine Speichertabelle ist.

## Revendications

1. Procédé de définition d'un message personnalisé pour la gestion de terminaux dans une plateforme, machine à machine, M2M, **caractérisé en ce que** le procédé comprend :
la réception (S201), par la plateforme M2M, d'une instruction de registre de message personnalisé pour définir le message personnalisé ;
la création (S202), par la plateforme M2M, d'une information de description du message personnalisé en fonction de tous les éléments du message personnalisé dans l'instruction de registre de message personnalisé, les éléments du message personnalisé comprenant un information d'identification et une description de fonction du message personnalisé et
la mémorisation (S203), par la plateforme M2M, de l'information de description du message personnalisé.

2. Procédé suivant la revendication 1, comprenant en outre le stade, précédant le stade de mémorisation de l'information de description du message personnalisé de :
la détermination que l'information d'identification du message personnalisé dans l'information de description du message personnalisé est différente de l'information d'identification de messages semblables déjà mémorisés dans la M2M.

3. Procédé suivant la revendication 1, dans lequel le stade de mémorisation de l'information de description du message personnalisé comprend : la mémorisation de l'information de description du message personnalisé dans une base de données.

4. Procédé suivant la revendication 3, comprenant en outre :
la mémorisation de l'information de description du message personnalisé dans une table de mémoire ou
la mise à jour régulièrement de l'information de description de chaque message personnalisé de la base de données dans la table de mémoire.

5. Procédé suivant la revendication 1, dans lequel le message personnalisé est un Tag-Length-Value personnalisé et les éléments du message personnalisé comprennent en outre : la longueur et le type de données du message personnalisé.

6. Procédé suivant la revendication 1, dans lequel le message personnalisé est une instruction personnalisée.

7. Système de définition d'un message personnalisé pour la gestion de terminaux dans une plateforme de machine à machine, M2M, **caractérisé en ce que** le système comprend :
un terminal ou une plateforme (801) d'application, configuré pour envoyer une instruction de registre de message personnalisé pour définir le message personnalisé lorsque le message personnalisé est défini et
une plateforme (802) M2M, configurée pour recevoir l'instruction de registre de message personnalisé du terminal ou de la plateforme (801) d'application, créer une information de description du message personnalisé en fonction de tous les éléments du message personnalisé dans l'instruction de registre du message personnalisé et mémoriser l'information de description du message personnalisé, les éléments du message personnalisé comprenant une information d'identification et une description de fonction du message personnalisé.

8. Système suivant la revendication 7, dans lequel la plateforme (802) M2M comprend :
une unité (901) de réception, configurée pour recevoir l'instruction de registre de message personnalisé envoyée par le terminal ou par la plateforme (801) d'application ;
une unité (902) de traitement personnalisé, configurée pour créer une information de description d'un message personnalisé en fonction de tous les éléments du message personnalisé dans l'instruction de registre de message personnalisé reçue par l'unité (901) de réception ;
une unité (903) de mémorisation, configurée pour mémoriser l'information de description du message personnalisé, qui est créée par l'unité (902) de traitement personnalisé.

9. Système suivant la revendication 8, dans lequel la plateforme (802) M2M comprend en outre :
une unité de détermination, configurée pour déterminer si l'information d'identification du message personnalisé dans l'information de description du message personnalisé, qui est créée par l'unité (902) de traitement personnalisé, est différente de l'information d'identification de messages semblables déjà mémorisés dans l'unité (903) de mémorisation ;
dans lequel l'unité (903) de mémorisation est configurée en outre pour mémoriser l'information de description du message personnalisé, qui est créée par l'unité (902) de traitement personnalisé et vérifiée par l'unité de détermination.

10. Système suivant la revendication 8 ou 9, dans lequel l'unité (903) de mémorisation est :
une base de données ou
une base de donnée et une table de mémoire.

11. Plateforme de machine à machine, M2M, **caractérisée en ce que** la plateforme M2M comprend :
une unité (901) de réception, configurée pour recevoir une instruction de registre de message personnalisé pour définir un message personnalisé pour la gestion de terminaux envoyé par un terminal ou par une plateforme d'application ;
une unité (902) de traitement personnalisé, configurée pour créer une information de description du message personnalisé en fonction de tous les éléments du message personnalisé dans l'instruction de registre de message personnalisé reçue par l'unité (901) de réception, les éléments du message personnalisé comprenant une information d'identification et une description de fonction du message personnalisé et
une unité (903) de mémorisation, configurée pour mémoriser l'information de description du message personnalisé, qui est créée par l'unité (902) de traitement personnalisé.

12. Plateforme M2M suivant la revendication 11, comprenant en outre :
une unité de détermination, configurée pour déterminer si l'information d'identification du message personnalisé dans l'information de description du message personnalisé, qui est créée par l'unité (902) de traitement personnalisé, est différente de l'information d'identification de messages semblables déjà mémorisés dans l'unité (903) de mémorisation ;
dans lequel l'unité (903) de mémorisation est configurée en outre pour mémoriser l'information de description du message personnalisé, qui est créée par l'unité (902) de traitement personnalisé et vérifiée par l'unité de détermination.

13. Plateforme M2M suivant la revendication 11 ou 12, dans laquelle l'unité (903) de mémorisation est :
une base de données ou
une base de donnée et une table de mémoire.
